# EUROPÄISCHE PATENTSCHRIFT

(11) **EP 1 994 189 B1**
(45) Veröffentlichungstag und Bekanntmachung des Hinweises auf die Patenterteilung: **12.02.2014**
(21) Anmeldenummer: 07726535.3
(22) Anmeldetag: 28.02.2007
(51) Int. Cl.: C22B 3/00, C22B 15/00

(54) **VERFAHREN ZUM SAUREN AUFSCHLUSS VON METALLHALTIGEN VERBINDUNGEN**
PROCESS FOR THE ACID DIGESTION OF METAL-CONTAINING COMPOUNDS
PROCEDE DE DISSOLUTION ACIDE DE COMPOSES QUI CONTIENNENT DES METAUX

(30) Priorität: 01.03.2006 EP 06110545
(43) Veröffentlichungstag der Anmeldung: 26.11.2008
(73) Patentinhaber: BASF SE, 67056 Ludwigshafen (DE)
(72) Erfinder: HEIDENFELDER, Thomas, 67125 Dannstadt-Schauernheim (DE); WITTELER, Helmut, 67157 Wachenheim (DE); LAUBUSCH, Bernd, 68642 Bürstadt (DE); SEELMANN-EGGEBERT, Hans-Peter, 67117 Limburgerhof (DE)
(86) Internationale Anmeldenummer: PCT/EP2007/051899
(87) Internationale Veröffentlichungsnummer: WO 2007/099119

(56) Entgegenhaltungen:
- EP-A- 0 690 024
- EP-A1- 0 536 914
- EP-A1- 1 050 604
- DD-A3- 146 756
- US-A- 3 471 252
- US-A- 3 725 296
- US-A- 5 660 806

## Beschreibung

Die vorliegende Erfindung betrifft ein Verfahren zum sauren Aufschluss von metallhaltigen Verbindungen durch Laugung mittels eines wässrigen Laugungsmittels, wobei das wässrige Laugungsmittel i) eine Alkansulfonsäure mit einem Propyl-, Ethyl- oder Methylrest und Schwefelsäure bei einem Gewichtsverhältnis von Alkansulfonsäure zu Schwefelsäure zwischen 1 : 1 000 und 1 : 1 und/oder ii) ein Gemisch aus einem oder mehreren Alkansulfonsäuresalzen mit einem Propyl-, Ethyl- oder Methylrest und Schwefelsäure bei einem Gewichtsverhältnis von Alkansäuresalz zu Schwefelsäure von 1 : 9 bis 1 : 99 enthält. Weiterhin ist ein wässriges Laugungsmittel, enthaltend eine oder mehrere Alkansulfonsäuren und Schwefelsäure und/oder Tensid sowie ein wässriges Laugungsmittel enthaltend ein oder mehrere Alkansulfonsäuresalze, Schwefelsäure und gegebenenfalls Tensid Gegenstand der vorliegenden Erfindung.

Das erfindungsgemäße Verfahren eignet sich beispielsweise zur Gewinnung von Kupfer, zur Herstellung von TiO₂ oder zum Aufschluss von Flussspat (CaF₂) zur Herstellung von Fluorwasserstoff.

Die wenigsten Metalle kommen in der Natur in gediegener Form vor. Meist liegen sie kationisch als Oxide, Sulfide, Arsenide, Halogenide, Carbonate, Phosphate, Sulfate usw. vor. Es handelt sich dabei um metallhaltige Mineralien oder Mineralgemenge, die mehr oder weniger mit Gestein verwachsen sind und bei wirtschaftlicher Bedeutung als Erze bezeichnet werden.

Um die reinen Elemente zu gewinnen, müssen die Mineralien und Erze aufgeschlossen werden und die Metalle daraus extrahiert werden. Eine Möglichkeit besteht im so genannten "Leaching-Verfahren" (Laugung), bei dem die Metallionen mittels saurer oder basischer wässriger Lösungen unmittelbar aus dem Erz extrahiert werden. Das zum Einsatz kommende Laugungsmittel hängt vom Erztyp und dem Vorkommen in der jeweiligen Lagerstätte ab. Für Viele Erzvorkommen hat sich verdünnte Schwefelsäure (1 bis 5 Gew.-%) bewährt.

Dieses Verfahren lässt sich beispielsweise gut auf kupferarme Erze und Abfallprodukte, die einen Kupfergehalt von weniger als 2 Gew.-% aufweisen, zum Beispiel auf die bei der Schwefelsäurefabrikation anfallenden kupferhaltigen Pyritabbrände anwenden. Diese Ausgangsmaterialien werden - nötigenfalls nach vorherigem Rösten - mit verdünnter Schwefelsäure behandelt und aus der so erhaltenen Kupfersulfatlösung das Kupfer durch weitere Aufarbeitungsschritte gewonnen.

Üblicherweise erfolgt die Extraktion des Kupfers so, dass das kupferhaltige Material aufgeschüttet und dann mit verdünnter Schwefelsäure von oben besprüht wird, so dass die verdünnte Schwefelsäure durch das kupferhaltige Material durchperkolieren oder durchrieseln kann. Die mit Kupfer angereicherte Mutterlauge sammelt sich am Boden des Haufens an und wird der weiteren Aufarbeitung zugeführt.

Allerdings muss die verdünnte Schwefelsäure bis hin zu mehreren Wochen auf das Kupfererz einwirken, um zufrieden stellende Mengen an Metallionen aus dem Erz zu lösen. Im Allgemeinen sind die Ausbeuten bei der Kupfergewinnung nach diesem Verfahren gering.

Ein Verfahren zum sauren Aufschluss von Kupfererzen mit niedrigem Kupfergehalt ist in der US 4,120,935 beschrieben. Dabei wird das Kupfererz mit konzentrierter Schwefelsäure benetzt und mindestens 3 Tage bis zum Auswaschen des Erzes mit der 5- bis 10-fachen Menge niedrig konzentrierter Schwefelsäure gewartet.

In der deutschen Anmeldung mit der Nummer DE 10 2004 063 500.5 wird zur Erhöhung der Ausbeute der Zusatz von Tensiden zu der verdünnten Schwefelsäure beschrieben: Die Tenside werden dabei so gewählt, dass sie in einer Konzentration von 0,01 bis 0,3 Gew.-% in einer 2 %igen wässrigen-H₂SO₄-Lösung bei 23°C zu einer Erniedrigung des Kontaktwinkels auf Glas nach 1 Sekunde um mindestens 10° führen.

EP 0 536 914 beschreibt die Verwendung von fluoraliphatischen Tensiden der allgemeinen Formel (Rf)ₙ(Q)ₓZ, in der Rf einem fluoraliphatischen Rest, Q einer Verknüpfungseinheit und Z einer wasserlöslichen Gruppe entspricht, bei der extraktiven Gewinnung von Kupfer (n gleich 1 oder 2 und x ist gleich 0 oder 1) mittels eines wässrigen Schwefelsäure enthaltenden Laugungsmittels.

Nachteilig an diesen bekannten Verfahren sind jedoch die großen Mengen an Schwefelsäure, welche zur Abtrennung des Kupfers aus den kupferhaltigen Materialien benötigt werden, sowie die im Allgemeinen unbefriedigende Ausbeute an Kupfer während der Extraktion, welche üblicherweise maximal 80 % beträgt. Ferner erfordert die Extraktion einen erheblichen Zeitaufwand zwischen einigen Tagen bis zu einigen Monaten.

Aufgabe der vorliegenden Erfindung ist es, ein alternatives Verfahren zum sauren Aufschluss von metallhaltigen Verbindungen mit Hilfe eines wässrigen Laugungsmittels bereitzustellen. Unter anderem soll im Vergleich zu den oben beschriebenen Verfahren eine erhöhte Ausbeute an Metallionen, bezogen auf die verwendete metallhaltige Verbindung, erzielt werden.

Die Aufgabe wird gelöst durch ein Verfahren zum sauren Aufschluss metallhaltiger Verbindungen durch Laugung mittels eines wässrigen Laugungsmittels, wobei das Laugungsmittel i) eine oder mehrere Alkansulfonsäuren mit einem Propyl-, Ethyl- oder Methylrest und Schwefelsäure bei einem Gewichtsverhältnis von Alkansulfonsäure zu Schwefelsäure zwischen 1 : 1 000 und 1 : 1 und/oder ii) ein Gemisch aus einem oder mehreren Alkansulfonsäuresalzen mit einem Propyl-, Ethyl- oder Methylrest und Schwefelsäure bei einem Gewichtsverhältnis von Alkansulfonsäure zu Schwefelsäure von 1 : 9 bis 1 : 99 enthält.

Ein Vorteil des erfindungsgemäßen Verfahrens ist, dass die Extraktion von metallhaltigen Verbindungen mittels einer wässrigen, Alkansulfon- und Schwefelsäure und/oder ein Gemisch aus Alkansulfonsäuresalz und Schwefelsäure enthaltenden Lösung zu deutlich höheren Ausbeuten an Metallionen führt, als sie bei der Extraktion mittels wässriger Schwefelsäure ohne Zusatz von Alkansulfonsäure und/oder Alkansulfonsäuresalz gefunden werden. Der Aufschluss lässt sich somit in kürzerer Zeit und/oder mit geringeren Mengen an Laugungsmittel durchführen. Ein weiterer Vorteil besteht in der sehr breiten Anwendbarkeit des erfindungsgemäßen Verfahrens. So lassen sich neben den Metallen auch Metallverbindungen wie TiO₂ darstellen, des Weiteren können nach dem erfindungsgemäßen Verfahren zur Herstellung von Flusssäure beispielsweise CaF₂- haltige Verbindungen aufgeschlossen werden. Die Verwendung von Alkansulfonsäuresalzen im Gemisch mit Schwefelsäure bietet zudem den Vorteil, dass bei anderen chemischen Verfahren als Abfallprodukte anfallende Alkansulfonsäuresalze nutzbringend eingesetzt werden können.

Das erfindungsgemäße Verfahren eignet sich prinzipiell zur Laugung jeglicher metallhaltiger Verbindungen, bei denen sich ein Metall unter Behandlung mit Schwefelsäure aus den entsprechenden Verbindungen, beispielsweise Erzen, Gestein oder Mineralien, lösen lässt. Bei den metallhaltigen Verbindungen, die nach dem vorliegenden Verfahren aufgeschlossen werden können, handelt es sich beispielsweise um Oxide, Sulfide, Arsenide, Chloride, Carbonate, Phosphate oder Fluoride.

Zu den kupferhaltigen oxidischen Erzen gehören zum Beispiel das rote Rotkupfererz (Cuprit) Cu₂O, der grüne Malachit Cu₂(OH)₂(CO₃) (= "CuCO₃·Cu(OH)₂" und die blaue Kupferlasur (Azurit)Cu₃(OH)₂(CO₃)₂ (= "2CuCo₃·Cu(OH)₂"), zu den sulfidischen Kupfererzen zum Beispiel Kupferkies (Chalkopyrit) CuFeS₂ (= "Cu₂S·Fe₂S₃"), Buntkupfererz (Bornit) Cu₃FeS₃ (= "3Cu₂S·Fe₂S₃"), Cubanit CuFe₂S₃ und Kupferglanz (Chalkosin) Cu₂S. Weitere Metalle, die aus ihren Erzen durch saure Extraktion erhalten werden können, sind Zink, Blei, Molybdän, Antimon, Bismut, Quecksilber, Kobalt oder Nickel.

Zur Gewinnung von Zink werden die Zinkerze (Zinkblende, Zinkspat) vor der Laugung geröstet.

Lanthan und die Lanthanoide lassen sich durch den erfindungsgemäßen sauren Aufschluss von Cerit, Monazit, Turnerit und Orthit erhalten.

Aus Uranerzen kann nach dem erfindungsgemäßen Verfahren Uranylsulfat erhalten werden, das zu Uran weiterverarbeitet wird.

Bevorzugt werden metallhaltige Verbindung, die Kupfer, Titan, CaF₂, Zink, Blei, Molybdän, Antimon, Bismut, Quecksilber, Kobalt, Nickel, Aluminium, Lanthan, Lanthanoide oder Uran enthält, nach dem erfindungsgemäßen Verfahren aufgeschlossen.

Das in der metallhaltigen Verbindung enthaltende Metall kann in jeder für das jeweilige Metall möglichen Oxidationsstufe vorliegen.

Häufig ist die Laugung nur ein Zwischenschritt in der Metallgewinnung, in der das gewünschte Metall aus dem Gestein in eine lösliche Form überführt wird, die dann weiteren Reinigungs- und Aufarbeitungsschritten unterworfen wird.

In manchen Fällen ist jedoch nicht das reine Metall das gewünschte Endprodukt. Beispielsweise werden Titanmineralien wie Ilmenit (FeTiO₃) zur TiO₂-Herstellung, Bauxit zur Alaunherstellung oder Aluminiumhydroxid zur Aluminiumsulfatherstellung aufgeschlossen.

Es können nicht nur frisch abgebaute Erze und Mineralien, sondern auch Abfall- oder Zwischenprodukte aus anderen Prozessen wie die bei der Schwefelsäureherstellung anfallen-den kupferhaltigen Pyritabbrände oder bei der Abluftreinigung erhaltener Filterstaub oder Flugasche zur Gewinnung der darin enthaltenen Schwermetalle mit Hilfe des erfindungsgemäßen Verfahrens aufgeschlossen werden.

Nicht immer ist die Extraktion des im Mineral oder im Erz enthaltenen Kations Ziel des Verfahrens, sondern gegebenenfalls die Extraktion des Gegenions. Zum Beispiel wird der Aufschluss von Flussspat (CaF₂) zur Herstellung von Fluorwassserstoff genutzt oder der Aufschluss von Apatit Ca₅(PO₄)₃(F, OH, Cl) zur Gewinnung von Phosphorsäure angewendet.

Auch in diesen Fällen können die das gewünschte Anion als Gegenion enthaltenden metallhaltigen Verbindungen nach dem erfindungsgemäßen Verfahren aufgeschlossen werden.

Das nach dem erfindungsgemäßen Verfahren verwendete wässrige Laugungsmittel i) enthält zwischen 0,001 und 50 Gew.-% einer oder mehrerer Alkansulfonsäuren, bevorzugt 0,01 bis 10 Gew.-%. Gegebenenfalls kann die Alkansulfonsäure auch höher als 50 Gew.-% konzentriert sein. Vorzugsweise wird eine Alkansulfonsäure verwendet.

Das nach dem erfindungsgemäßen Verahren verwendete wässrige Laugungsmittel ii) enthält von 1 bis 10 Gew.% eines oder mehrerer Alkansulfonsäuresalze, von 90 bis 99 Gew.-% Schwefelsäure und gegebenenfalls 0 bis 5 Gew.-% Tenside.

Als Alkansulfonsäuren werden lineare und verzweigte Alkansulfonsäuren mit kurzkettigen Alkylresten wie Propyl-, Ethyl- oder Methylrest verwendet, besonders bevorzugt wird Methansulfonsäure eingesetzt. Sie können nach den dem Fachmann bekannten Methoden hergestellt werden, beispielsweise durch Sulfoxidation der entsprechenden Alkane.

Erfindungsgemäß werden als Alkansulfonsäuresalze die Ammonium-, Alkali- und Erdalkalisalze der vorstehend beschriebenen Alkansulfonsäuren eingesetzt. Bevorzugt sind die Ammoniumsalze und die Alkalisalze, besonders bevorzugt werden die Ammonium- und die Natriumsalze der Methansulfonsäure eingesetzt, ganz besonders bevorzugt ist das Natriumsalz der Methansulfonsäure (Natriummethansulfonat)

In einer bevorzugten Ausführungsform enthält das wässrige Laugungsmittel neben Alkansulfonsäure Schwefelsäure. Die Konzentration an Schwefelsäure beträgt zwischen 0 und 50 Gew.-%, bevorzugt zwischen 0 und 10 Gew.-%.

In einer bevorzugten Ausführungsform handelt es sich bei der verwendeten Schwefelsäure um verdünnte Schwefelsäure mit einem Gehalt von 1 bis 80 g/l H₂SO₄, besonders bevorzugt 2 bis 60 g/l H₂SO₄, insbesondere 5 bis 40 g/l H₂SO₄.

Das Verhältnis zwischen Schwefelsäure und Alkansulfonsäure in dem wässrigen Laugungsmittel gemäß der vorliegenden Erfindung liegt zwischen 1 000 : 1 und 1 : 1, bevorzugt zwischen 100 : 1 und 10 : 1.

Erfindungsgemäß beträgt das Verhältnis von Alkansulfonsäuresalz zu Schwefelsäure von 1 : 9 bis 1 : 99. Typischerweise enthalten Gemische aus Alkansulfonsäuresalz und Schwefelsäure 1 bis 10 Gew.-% Alkansulfonsäuresalz und 90 bis 99 Gew.-% Schwefelsäure.

In dem erfindungsgemäßen Verfahren können dem wässrigen Laugungsmittel Tenside zugesetzt werden. Die verwendeten Tenside können anionisch, kationisch, nichtionisch oder amphoter sein. Auch Mischungen der zuvor genannten Tensidklassen können verwendet werden. Dabei sind solche Tenside bevorzugt, welche nach einer Extraktion des Metalls aus dem metallhaltigen Material die weitere Aufarbeitung desextrahierten Metalls in der schwefelsauren Lösung nicht stören. So soll beispielsweise die Überführung von Kupfer aus der wässrigen Extraktionsphase in eine organische Phase nicht nachteilig beeinflusst werden. Geeignete Tensidsysteme müssen deshalb gute Netzmittel, aber schlechte Emulgatoren sein. In einer bevorzugten Ausführungsform der vorliegenden Erfindung wird daher ein Tensid verwendet, welches während der Extraktion der wässrigen Phase mit einer organischen Phase im Vergleich zu einer Phasentrennung ohne Tensid die Zeit bis zur Einstellung der Phasentrennung im Wesentlichen nicht verlängert.

Geeignete Tenside sollten darüber hinaus unter den durch die Alkansulfonsäure und gegebenenfalls die Schwefelsäure hervorgerufenen sauren Bedingungen in einer wässrigen Phase vorzugsweise stabil sein und vorzugsweise biologisch abbaubar, besonders bevorzugt leicht biologisch abbaubar, sein.

Insbesondere sollen Tenside eingesetzt werden, die in einer Konzentration von 0,01 bis 0,3 Gew.-%, besonders bevorzugt von 0,05 bis 0,25 Gew.-%, insbesondere von 0,1 bis 0,2 Gew.-%, in einer 2%igen wässrigen H₂SO₄-Lösung bei 23 °C zu einer Erniedrigung des Kontaktwinkels auf Glas nach 1 Sekunde, besonders bevorzugt nach 0,5 Sekunden, insbesondere nach 0,1 Sekunden, um mindestens 10 °, besonders bevorzugt mindestens 20 °, insbesondere mindestens 30 °, speziell mindestens 40 °, führen.

Besonders geeignet sind die in der deutschen Anmeldung mit der Nr. DE 10 2004 063 500.5 beschriebenen Tenside. Beispielsweise kann das Tensid ausgewählt werden aus
- der Gruppe der nichtionischen Tenside, wobei die nichtionischen vorzugsweise Tenside ausgewählt sind aus der Gruppe, bestehend aus Alkoholalkoxylaten, Alkylphenolalkoxylaten, Alkylpolyglucosiden, N-Alkylpolyglucosiden, N-Alkylglucamiden, Fettsäurealkoxylaten, Fettsäurepolyglykolestern, Fettsäureaminalkoxylaten, Fettsäureamidalkoxylaten, Fettsäurealkanolamidalkoxylaten, N-Alkoxypolyhydroxyfettsäureamiden, N-Aryloxypolyhydoxyfettsäureamiden, Blockcopolymeren aus Ethylenoxid, Propylenoxid und/oder Butylenoxid, Polyisobutenalkoxylaten, Polyisobuten-Maleinsäureanhydrid-Derivaten, Fettsäureglyceriden, Sorbitanestern, Polyhydroxyfettsäurederivaten, Polyalkoxyfettsäurederivaten und Bisglyceriden;
- der Gruppe der anionischen Tenside, wobei die anionischen Tenside vorzugsweise ausgewählt sind aus der Gruppe, bestehend aus, Fettalkoholsulfaten, sulfatierten alkoxylierten Alkoholen, Alkansulfonaten, N-Acylsarkosinaten, Alkylbenzolsulfonaten, Olefinsulfonaten und -disulfonaten, Alkylestersulfonaten, sulfonierten Polycarbonsäuren, Alkylglycerinsulfonaten, Fettsäureglycerinestersulfonaten, Alkylphenolpolyglykolethersulfaten, Paraffinsulfonaten, Alkylphosphaten, Acylisothionaten, Acyltauraten, Acylmethyltauraten, Alkylbernsteinsäuren, Alkenylbernsteinsäuren oder deren Halbster oder Halbamide, Alkylsulfonbernsteinsäuren oder deren Amide, Mono- und Diester von Sulfonbernsteinsäuren, sulfatierte Alkylpolyglycosiden, Alkylpolyglykolcarboxylaten und Hydroxyalkylsarkosinaten;
- der Gruppe der kationischen Tenside, wobei die kationischen Tenside vorzugsweise ausgewählt sind aus der Gruppe, bestehend aus Tetraalkylammuniumsalze, Imidazoliniumsalze und Aminoxiden;
- der Gruppe der amphoteren Tenside, wobei die amphoteren Tenside vorzugsweise ausgewählt sind aus der Gruppe, bestehend aus Tensiden, enthaltend Carbonsäruensowie weiterhin mindestens eine ethylenisch ungesättigte Monomereinheit der allgemeinen Formel (I)

   R¹(R²)C=C(R³)R⁴ (I),

   in der R¹ bis R⁴ unabhängig voneinander für -H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert, eine heteroatomare Gruppe mit mindestens einer positiv geladenen Gruppe, einem quaternisierten Stickstoffatom oder zumindest einer Amingruppe mit einer postiven Ladung im pH-Bereich zwischen 2 und 11 oder für -COOH oder -COOR⁵ steht, wobei R⁵ ein gesättigter oder ungesättigter, geradkettigter oder verzweigter Kohlenwasserstoffrest mit 1 bis 12 Kohlenstoffatomen ist.

Darüber hinaus ist es im Rahmen der vorliegenden Erfindung möglich, Tenside unterschiedlicher Klassen, beispielsweise anionische Tenside mit kationischen Tensiden amphotere Tenside mit nichtionischen Tensiden usw. in der erfindungsgemäßen Zusammensetzung zu verwenden. Dabei können Tenside aus einer, zwei, drei oder vier unterschiedlichen Tensidklassen (nichtionisch, anionisch, kationisch und amphoter) verwendet werden.

Weiterhin wurde gefunden, dass die beschriebenen Tensidsysteme in sehr niedrigen Einsatzkonzentrationen die Kinetik der Extraktion begünstigen, die Metallausbeute erhöhen und es ermöglichen, die Einsatzmenge an Alkansulfonsäure und/oder Schwefelsäure weiter zu senken.

In einer bevorzugten Ausführungsform der vorliegenden Erfindung weist die resultierende wässrige Zusammensetzung mit dem Tensid einen Kontaktwinkel auf Glas von kleiner 40 °, besonders bevorzugt kleiner 30 °, insbesondere kleiner 20 °, auf.

Der Kontaktwinkel wird dabei auf einem extra-weißen Glasträger der Firma Gerhard Menzel Glasbearbeitungswerk GmbH & Co. KG, Braunschweig mit einer Objektträgerdicke von 1 mm gemessen. Die ungefähre Zusammensetzung des Glasobjektträgers ist dabei wie folgt:

### Ungefähre chemische Zusammensetzung:

| | | |
|---|---|---|
| Siliziumdioxid | SiO₂ | 72.20 % |
| Natriumoxid | Na₂O | 14.30% |
| Kaliumoxid | K₂O | 1.20 % |
| Calciumoxid | CaO | 6.40 % |
| Magnesiumoxid | MgO | 4.30 % |
| Aluminiumoxid | Al₂O₃ | 1.20 % |
| Eisenoxid | Fe₂O₃ | 0.03 % |
| Schwefeltrioxid | SO₃ | 0.30 % |

### Weitere Eigenschaften des Glases sind wie folgt:

| | |
|---|---|
| Mittlerer Expansions-Koeffizient (20 - 300 °) | 90,6 x 10⁻⁷/C° |
| Dehnungspunkt log n 14.5 | 513 °C |
| Erweichungs-Littleton Punkt | 720 °C |

### Abstrahlung zweite Spiegeloberfläche:

Totale Solarreflexion (M = 2) als Proportion der Normalreflexion einer zweiten Spiegeloberfläche bei Solar-Elevation von 30 °: 95.3 %

### Lichtdurchlässigkeit:

Totale Solardurchlässigkeit (M = 2) als Proportion der Normaldurchlässigkeit bei Solar-Elevation von 30 °; 91.6 %

### Lichtbrechungsindex

| | |
|---|---|
| Bei λ = 546.07 nm | 1.5171 |
| Dichtigkeit | 2.479 |

Der Glasträger wird vor der Messung des Kontaktwinkels mit Aceton gereinigt und im Trockenschrank bei 70 °C für 2 Stunden getrocknet.

Die Aufwandmenge an nichtionischem Tensid beträgt erfahrungsgemäß pro Tonne Ausgangsmaterial 1 bis 30 ppm, vorzugsweise 1 bis 20 ppm, besonders bevorzugt 2 bis 15 ppm, insbesondere 3 bis 10 ppm. Es hat sich dabei als günstig erwiesen, zu Beginn des Extraktionsverfahrens eine höhere Konzentration einzusetzen als gegen Ende der Extraktion.

Weiterer Gegenstand der vorliegenden Erfindung ist ein wässriges Laugungsmittel, enthaltend
a) 0,001 - 50 Gew.% einer oder mehrerer Alkansulfonsäuren mit einem Propyl-, Ethyl- oder Methylrest,
b) 0,1 - 50 Gew.-% Schwefelsäure, und
c) 0 - 5 Gew.-% eines oder mehrerer anionischer, nicht-ionischer, kationischer oder amphoterer Tenside
wobei das Gewichtsverhältnis von Alkansulfonsäure zu Schwefelsäure zwischen 1:1000 und 1:1 liegt und wobei das vorhandene Wasser und die Summe der Komponenten a) bis c) 100 Gew.% ergeben.

Gegenstand der vorliegenden Erfindung ist auch ein wässriges Laugungsmittel enthaltend
a) 1 - 10 Gew.% eines oder mehrerer Alkansulfonsäuresalze mit einem Propyl-, Ethyl- oder Methylrest
b) 90 - 99 Gew.% Schwefelsäure
c) 0 - 5 Gew.% eines oder mehrerer anionischer, nicht-ionischer, kationischer oder amphoter Tenside,
wobei das Gewichtsverhältnis von Alkansulfonsäuresalz zu Schwefelsäure von 1:9 bis 1:99 beträgt und wobei das vorhandene Wasser und die Komponenten a) bis c) 100 Gew.-% ergeben.

In einer weiteren Ausführungsform der vorliegenden Erfindung kann das wässrige Laugungsmittel Alkansulfonsäure, Alkansulfonsäuresalz und Schwefelsäure enthalten.

Laugungsverfahren zum Aufschluss von metallhaltigen Verbindungen sind dem Fachmann prinzipiell bekannt.

Unter Laugung der aufzuschließenden, metallhaltigen Verbindungen nach dem erfindungsgemäßen Verfahren wird vorzugsweise verstanden, dass die metallhaltigen, gegebenenfalls zuvor zerkleinerten Verbindungen aufgehäuft werden und anschließend das wässrige Laugungsmittel, das heißt die wässrige, Alkansulfonsäure und Schwefelsäure und/oder Tensid enthaltende Lösung durch das aufgehäufte Material durchperkoliert oder durchrieselt. Das Besprühen der metallhaltigen Verbindungen erfolgt dabei vorzugsweise tropfenweise. Nach dem Abtrennen des Metalls oder der gewünschten Anionen aus dem Laugungsmittel wird dieses für weitere Extraktionsvorgänge vorzugsweise erneut verwendet.

In einer bevorzugten Ausführungsform werden vor der Laugung die metallhaltigen Verbindungen zunächst gemahlen, so dass Teilchen mit einem Durchmesser von ungefähr 10 cm erhalten werden. Die gemahlenen Teilchen werden dann angehäuft, wobei üblicherweise Haufen mit 100.000 bis 500.000 Tonnen Ausgangsmaterial gebildet werden. Diese werden dann gemäß dem Verfahren der vorliegenden Erfindung extrahiert.

Es sei ausdrücklich darauf verwiesen, dass erfindungsgemäß das Laugungsmittel während des Extraktionsverfahrens unterschiedliche Konzentrationen an Alkansulfonsäure und Schwefelsäure und/oder Tensid enthalten kann (Gradientenfahrweise). Darüber hinaus können die Tenside teilweise oder ganz auch schon vor Beginn des Extraktionsverfahrens dem Ausgangsmaterial bzw. Gestein, z. B. beim Mahlen des Materials, zugesetzt werden. In Abhängigkeit des zu extrahierenden Ausgangsmaterials kann es auch bevorzugt sein, wenn das zu extrahierende Ausgangsmaterial zur Benetzung zunächst mit einer konzentrierten Schwefelsäure vorbehandelt wird und im Anschluss daran das Ausgangsmaterial mit einem Überschuss an niedrig konzentrierter Schwefelsäure ausgewaschen wird, wie in US 4,120,935 beschrieben. Gemäß einer Ausführungsform der Erfindung kann die metallhaltige Verbindung mit konzentrierter Schwefelsäure vorbehandelt und im Anschluss daran mit Alkansulfonsäure und Schwefelsäure und/oder Tensid und/oder ein Gemisch aus einem oder mehreren Alkansulfonsäuresalzen und Schwefelsäure sowie gegebenenfalls Tensid enthaltendem wässrigen Laugungsmittel die gewünschten Anionen oder Kationen extrahiert werden. Der zur Vorbehandlung verwendeten konzentrierten Schwefelsäure kann auch Alkansulfonsäure und/oder Tensid und/oder Alkansulfonsäuresalz zugesetzt werden.

Wenn zur Vorbehandlung (Benetzung) eine konzentrierte Schwefelsäure verwendet wird, so beträgt deren Konzentration vorzugsweise 25 bis 500 g/l H₂SO₄, besonders bevorzugt 50 bis 400 g/l H₂SO₄, insbesondere 75 bis 300 g/l H₂SO₄.

Erfindungsgemäß kann das zum Aufschluss verwendete Laugungsmittel gegebenenfalls weitere Zusätze zur Metallextraktion enthalten, die dem Fachmann an sich bekannt sind. Ein Beispiel hierfür sind Eisen(III)-Ionen für die Kupfergewinnung, vorzugsweise in einer Konzentration von 5 bis 50 g/l, bezogen auf die erfindungsgemäße Zusammensetzung. Die Eisen(III)-Ionen werden dabei vorzugsweise in Form von Eisen(III)-sulfat in der erfindungsgemäßen Zusammensetzung verwendet. Weitere geeignete Zusätze sind beispielsweise Additive, welche Ca²⁺-Ionen, die oftmals vergesellschaftet mit Kupfer auftreten, stabilisieren. Beispiele hierfür sind Natriumpolyacrylate. Weitere geeignete Additive sind Aluminiumionen.

Die Laugung des metallhaltigen Ausgangsmaterials wird im Allgemeinen so lange durchgeführt, bis der Gehalt an extrahiertem Metall unter 1 g/l liegt. Hierfür sind in Abhängigkeit von der Art des zu extrahierenden Materials und dessen Menge Zeiträume von 5 Tagen bis mehreren Monaten üblich.

Wenn als Metall Kupfer gewonnen werden soll, ist eine weitere im Rahmen der vorliegenden Erfindung geeignete Vorbehandlung für das zu extrahierende kupferhaltige Ausgangsmaterial das Rösten. Dieses erfolgt vorzugsweise durch Erhitzen in so genannten Röstöfen, beispielsweise Drehrohröfen, Etagenöfen oder Wirbelschichtröstöfen, unter Luftzutritt. Dabei werden im Allgemeinen Metallsulfide, -arsenide und -antimonide des Kupfers und vergesellschafteter Metalle in die entsprechenden Oxide überführt.

Aus der erhaltenen wässrigen Mutterlauge kann in einer bevorzugten Ausführungsform das Metall durch Extraktion mit einem organisch löslichen Komplexbildner entfernt werden. Hierzu können beispielsweise organische lösliche Komplexbildner der Firmen Cognis (Lix^{®}-Typen) und Cytec verwendet werden. Vorzugsweise handelt es sich dabei um 2-Hydroxy-5-nonylacetophenonoxim, das in einer organischen Lösung (Shellsol^{®}) eingesetzt wird. Im Anschluss hieran wird das Kupfer aus der organischen Lösung vorzugsweise durch wässrige Schwefelsäure in eine wässrige, vorzugsweise stark saure Phase überführt und hier-aus auf elektrochemischem Weg gewonnen. Diese Verfahrensweisen sind dem Fachmann an sich bekannt und beispielsweise in EP 0 536 914 A1 beschrieben.

Bei der Kupfergewinnung kann alternativ aus der in dem erfindungsgemäßen Verfahren erhaltenen Mutterlauge das extrahierte Kupfer auch durch Eisenschrott ausgefällt werden. Diese Vorgehensweise, die im Allgemeinen als "Zementieren" bezeichnet wird, ist dem Fachmann an sich bekannt. Üblicherweise schließt sich an das Zementieren ein Verschmelzen des gewonnenen Kupfers sowie eine elektrolytische Aufreinigung an.

Das erfindungsgemäße Verfahren lässt sich sehr breit einsetzen. Als Beispiel sind die folgenden Prozesse zur Gewinnung verschiedener Rohstoffe aus den entsprechenden metallhaltigen Verbindungen aufgeführt.

Das heute produzierte Zink ist zu ca. 80 % so genanntes Elektrolytzink. Dieses wird gewonnen, indem der Röstung der Zinkerze (Umwandlung der Zinkerze wie Zinkblende und Zinkspat in Zinkoxid) eine Laugung mit Schwefelsäure angeschlossen und durch Eintragen von Zink-Staub edlere Begleitmetalle (Pb, Ni, Cd, Co, Ag usw.) abgeschieden werden. In einer Ausführungsform des erfindungsgemäßen Verfahrens wird zur Laugung der gerösteten Zinkerze eine wässrige Lösung von Alkansulfonsäure und gegebenenfalls Schwefelsäure und/oder Tensid verwendet.

Auch in der Lanthangewinnung ist das erfindungsgemäße Verfahren einsetzbar. Hauptrohstoff-Lieferant für die Gewinnung von Lanthan ist der Monazitsand. An dessen Aufschluss mit Schwefelsäure schließt sich die Fällung von Lanthan gemeinsam mit den anderen Seltenerdemetallen als Oxalat an; eine Kombination von Fällen, Ionenaustausch und Extraktionsverfahren (Lanthanoidentrennung) führt zu reinen Lanthanlösungen, aus denen man Lanthan(III)-oxalat fällt, dieses zu Lanthan(III)-oxid verglüht und entweder im Gemisch mit Kohle im Chlorstrom bei erhöhter Temperatur in Lanthan(III)-chlorid oder durch Reaktion mit Fluorwasserstoff im Drehrohrofen in Lanthah(III)-fluorid überführt. Das Metall wird schließlich durch Schmelzflusselektrolyse von Lanthan(III)-chlorid oder durch Reduktion von Lanthan(III)-fluorid mit Calcium/Magnesium gewonnen. In einer Ausführungsform des erfindungsgemäßen Verfahrens wird der Aufschluss des Monazitsandes mit Hilfe eines wässrigen Laugungsmittels durchgeführt, das Alkansulfonsäure und gegebenenfalls Schwefelsäure und/oder Tensid enthält.

Das erfindungsgemäße Verfahren kann auch bei der Urangewinnung eingesetzt werden. Üblicherweise wird zur Urangewinnung das Erz nach der Intensität der Radioaktivität sortiert und gemahlen. Anschließend wird durch saure Laugung Uranylsulfat (UO₂SO₄) erhalten. Zu den sauren Verfahren zählt auch die bakterielle Laugung mit Thiobacilllus ferrooxidans. Aus den erhaltenen Lösungen gewinnt man das Uran durch lonenaustauschverfahren oder durch Extraktion mit organischen Lösungsmitteln. Schließlich wird das Uran ausgefällt und zum verkaufsfähigen Yellow Cake (Ammonium- und/oder Magnesiumdiuranat) getrocknet. In einer Ausführungsform der vorliegenden kann für die Extraktion des Urans aus seinem Erz ein wässriges Laugungsmittel verwendet werden, das Alkansulfonsäure und gegebenenfalls Schwefelsäure und/oder Tensid enthält.

Auch bei der Herstellung von TiO₂ kann das erfindungsgemäße Verfahren eingesetzt werden. Nach dem Sulfatverfahren behandelt man die aus Ilmenit (FeTiO₃ durch Reduktion mit Koks erhältliche metallische Titanschlacke üblicherweise mit konzentrierter Schwefelsäure und löst den hierbei gewonnenen Aufschlusskuchen in heißem Wasser bzw. Natronlauge, wobei Titandioxid-Hydrat ausfällt, welches in Drehrohröfen bei 800 bis 1000°C zu feinkörnigem Anastas bzw. bei > 1000°C zu grobkörnigem Rutil gebrannt wird. In einer Ausführungsform der vorliegenden Erfindung wird bei der Herstellung von TiO₂ die metallische Titanschlacke mit einem wässrigen Laugungsmittel behandelt, das Alkansulfonsäure und gegebenenfalls Schwefelsäure und/oder Tensid enthält.

Eine weitere Anwendungsmöglichkeit des erfindungsgemäßen Verfahrens besteht in der Herstellung von Fluorwasserstoff. Dieser wird üblicherweise durch Aufschluss von Flussspat (CaF₂) mit konzentrierter Schwefelsäure hergestellt. Einer weiteren Ausführungsform der vorliegenden Erfindung nach kann der Aufschluss mit Hilfe eines wässrigen Laugungsmittels, das Alkansulfonsäure, und gegebenenfalls Schwefelsäure und/oder Tensid enthält, durchgeführt werden.

Das erfindungsgemäße Verfahren kann demgemäß beim Aufschluss einer Vielzahl von metallhaltigen Verbindungen dienen, bevorzugt werden kupferhaltige, TiO₂-haltige und CaF₂-haltige Verbindungen als aufzuschließende, metallhaltige Verbindungen eingesetzt. Besonders bevorzugt wird Kupfer mit Hilfe des erfindungsgemäßen Verfahrens gewonnen.

Im Folgenden soll anhand von kupferhaltigen Verbindungen die Wirksamkeit des vorliegenden Verfahrens dargestellt werden.

### Beispiele

### Beispiel A

### Verwendete Materialien

| | |
|---|---|
| Kupfer(II)sulfat-5-hydrat | CuSO₄ x 5 H₂O, Fa. Riedel-de-Haen |
| Kupfer(I)-sulfid | Cu₂S, Fa. Aldrich |
| Kupfer(II)-oxid | CUO, Fa. Riedel-de-Haen |
| Quarzsand | 0,2 - 0,5 mm, Schnaitenbach/Bayern |

### Zusammensetzung der kupferhaltigen Mischung

| Verbindung | Einwaage [g] |
|---|---|
| Kupfer(II)-sulfat-5-hydrat | 1 |
| Kupfer(I)-sulfid | 1 |
| Kupfer(II)-oxid | 1 |
| Quarzsand | 500 |

### Zusammensetzung der Säuremischungen

| Versuch | V1 | V2 | V3 | V4 | V5 | V6 | V7 |
|---|---|---|---|---|---|---|---|
| | (Vergleich) | (Vergleich) | | | | | (Vergleich) |
| 3%ige Schwefelsäure [ml] | - | 10 | 20 | 30 | 35 | 39 | 40 |
| 3%ige MSA* [ml] | 40 | 30 | 20 | 10 | 5 | 1 | - |

| | | | | | | | |
|---|---|---|---|---|---|---|---|
| *Methansutfonsäure | | | | | | | |

### Durchführung

Die kupferhaltigen Abmischungen werden bei Raumtemperatur mit den Säuremischungen versetzt, 2,5 h mit dem Magnetrührer gerührt und 24 h über Nacht stehen gelassen. Anschließend wird über einen Filter mit einer Porenweite von 0,45 µm abgenutscht, das Filtrat mit destilliertem Wasser auf 250 ml aufgefüllt und der Kupfergehalt der Lösung bestimmt.

| Versuch | V1 | V2 | V3 | V4 | V5 | V6 | V7 |
|---|---|---|---|---|---|---|---|
| | (Vergleich) | (Vergleich) | | | | | (Vergleich) |
| 3%ige Schwefelsäure [ml] | - | 10 | 20 | 30 | 35 | 39 | 40 |
| 3%ige MSA [ml] | 40 | 30 | 20 | 10 | 5 | 1 | - |
| Cu in [g/100 g] | 0,058 | 0,059 | 0,065 | 0,075 | 0,086 | 0,11 | 0,057 |

### Beispiel B

### Verwendete Materialien

Kupfererz, EVD Nr. 63280, Cerro Colorado von BHP-Billiton, Korngröße < 0,5 mm Schwefelsäure

### Methansulfonsäure

Natriummethansulfonat, hergestellt aus äquimolaren Mengen Methansulfonsäure und Na-OH

### Durchführung

50 g Erzpulver werden mit 100 g der 3-prozentigen wässrigen Säureprüflösung 150 min intensiv gerührt und 24 h stehen gelassen. Die Lösung wird anschließend quantitativ unter Vakuum filtriert. Das Filtrat wird mit destilliertem Wasser auf 250 ml aufgefüllt und der Kupfergehalt der Lösung bestimmt.

| Versuch | V8 | V9 | V10 |
|---|---|---|---|
| | (Vergleich) | | |
| Schwefelsäure [%] | 3,0 | 2,9 | 2,9 |
| MSA [%] | - | 0,1 | - |
| Na-Methansulfonat | - | - | 0,1 |
| Ausbeute Cu [%] | 35 | 38 | 38 |

## Patentansprüche

1. Verfahren zum sauren Aufschluss metallhaltiger Verbindungen durch Laugung mittels eines wässrigen Laugungsmittels, **dadurch gekennzeichnet, dass** das Laugungsmittel i) eine oder mehrere Alkansulfonsäuren mit einem Propyl-, Ethyl- oder Methylrest und Schwefelsäure bei einem Gewichtsverhältnis von Alkansulfonsäure zu Schwefelsäure zwischen 1 : 1 000 und 1 : 1 und/oder ii) ein Gemisch aus einem oder mehreren Alkansulfonsäuresalzen mit einem Propyl-, Ethyl- oder Methylrest und Schwefelsäure bei einem Gewichtsverhältnis von Alkansulfonsäuresalz zu Schwefelsäure von 1 : 9 bis 1 : 99 enthält.

2. Verfahren nach Anspruch 1, **dadurch gekennzeichnet, dass** die Konzentration der Schwefelsäure zwischen 0,1 und 50 Gew.% liegt.

3. Verfahren nach Anspruch 1 oder 2, **dadurch gekennzeichnet, dass** das Laugungsmittel zwischen 0,001 und 50 Gew.% Alkansulfonsäure enthält.

4. Verfahren nach einem der Ansprüche 1 bis 3, **dadurch gekennzeichnet, dass** die Alkansulfonsäure Methansulfonsäure ist.

5. Verfahren nach einem der Ansprüche 1 bis 4, **dadurch gekennzeichnet, dass** Alkansulfonsäuresalz ein Ammonium-, ein Alkali- oder ein Erdalkalisalz ist.

6. Verfahren nach einem der Ansprüche 1 bis 5, **dadurch gekennzeichnet, dass** das Alkansulfonsäuresalz ein Methansulfonsäuresalz, insbesondere Natriummethansulfonat, ist.

7. Verfahren nach einem der Ansprüche 1 bis 6, **dadurch gekennzeichnet, dass** das Laugungsmittel ein oder mehrere nicht-ionische, anionische, kationische oder amphotere Tenside enthält.

8. Verfahren nach Anspruch 7, **dadurch gekennzeichnet, dass** das oder die Tenside in einer Gesamtkonzentration von 0,1 bis 0,3 Gew.% in 2 %iger wässriger H₂SO₄-Lösung bei 23°C zu einer Erniedrigung des Kontaktwinkels auf Glas nach 1 Sekunde um mindestens 10° führt.

9. Verfahren nach einem der Ansprüche 1 bis 8, **dadurch gekennzeichnet, dass** die metallhaltige Verbindung Kupfer, Titan, CaF₂, Zink, Blei, Molybdän, Antimon, Bismut, Quecksilber, Kobalt, Nickel, Aluminium, Lanthan, Lanthanoide oder Uran enthält.

10. Verfahren nach Anspruch 9, **dadurch gekennzeichnet, dass** die metallhaltige Verbindung Kupfer, Titan oder CaF₂ enthält.

11. Verfahren nach einem der Ansprüche 1 bis 10, **dadurch gekennzeichnet, dass** das Verfahren zur Gewinnung von Kupfer dient.

12. Wässriges Laugungsmittel, enthaltend
a) 0,001 - 50 Gew.-% einer oder mehrerer Alkansulfonsäuren mit einem Propyl-, Ethyl- oder Methylrest,
b) 0,1 - 50 Gew.-% Schwefelsäure und
c) 0 - 5 Gew.-% eines oder mehrerer nicht-ionischer, anionischer, kationischer oder amphoter Tenside
wobei das Gewichtsverhältnis von Alkansulfonsäure zu Schwefelsäure zwischen 1:1000 und 1:1 liegt.

13. Wässriges Laugungsmittel, enthaltend
a) 1 - 10 Gew.-% eines oder mehrerer Alkansulfonsäuresalze mit einem Propyl-, Ethyl- oder Methylrest,
b) 90 - 99 Gew.% Schwefelsäure und
c) 0 - 5 Gew.% eines oder mehrerer nicht-ionischer, anionischer, kationischer oder amphoter Tenside
wobei das Gewichtsverhältnis von Alkansulfonsäuresalz zu Schwefelsäure von 1:9 bis 1:99 beträgt.

## Claims

1. A process for the acid digestion of metal-comprising compounds by leaching by means of an aqueous leachant, wherein the leachant comprises i) one or more alkanesulfonic acids having a propyl, ethyl or methyl radical and sulfuric acid at a weight ratio of alkanesulfonic acid to sulfuric acid of from 1 : 1000 to 1 : 1 and/or ii) a mixture of one or more alkanesulfonic acid salts having a propyl, ethyl or methyl radical and sulfuric acid at a weight ratio of alkanesulfonic acid salt to sulfuric acid of from 1 : 9 to 1 : 99.

2. The process according to claim 1, wherein the concentration of the sulfuric acid is from 0.1 to 50% by weight.

3. The process according to claim 1 or 2, wherein the leachant comprises from 0.001 to 50% by weight of alkanesulfonic acid.

4. The process according to any of claims 1 to 3, wherein the alkanesulfonic acid is methanesulfonic acid.

5. The process according to any of claims 1 to 4, wherein the alkanesulfonic acid salt is an ammonium salt, an alkali metal salt or an alkaline earth metal salt.

6. The process according to any of claims 1 to 5, wherein the alkanesulfonic acid salt is a methanesulfonic acid salt, in particular sodium methanesulfonate.

7. The process according to any of claims 1 to 6, wherein the leachant comprises one or more nonionic, anionic, cationic or amphoteric surfactants.

8. The process according to claim 7, wherein the surfactant or surfactants in a total concentration of from 0.1 to 0.3% by weight in 2% strength aqueous H₂SO₄ solution at 23°C leads to a reduction in the contact angle on glass by at least 10° after 1 second.

9. The process according to any of claims 1 to 8, wherein the metal-comprising compound comprises copper, titanium, CaF₂, zinc, lead, molybdenum, antimony, bismuth, mercury, cobalt, nickel, aluminum, lanthanum, lanthanides or uranium.

10. The process according to claim 9, wherein the metal-comprising compound comprises copper, titanium or CaF₂.

11. The process according to any of claims 1 to 10, wherein the process is employed for the winning of copper.

12. An aqueous leachant comprising
a) 0.001 - 50% by weight of one or more alkanesulfonic acids having a propyl, ethyl or methyl radical,
b) 0.1 - 50% by weight of sulfuric acid and
c) 0 - 5% by weight of one or more nonionic, anionic, cationic or amphoteric surfactants
where the weight ratio of alkanesulfonic acid to sulfuric acid is from 1 : 1000 to 1 : 1.

13. An aqueous leachant comprising
a) 1-10% by weight of one or more alkanesulfonic acid salts having a propyl, ethyl or methyl radical,
b) 90-99% by weight of sulfuric acid and
c) 0-5% by weight of one or more nonionic, anionic, cationic or amphoteric surfactants
where the weight ratio of alkanesulfonic acid salt to sulfuric acid is from 1 : 9 to 1 : 99.

## Revendications

1. Procédé pour la digestion acide de composés métalliques par lessivage au moyen d'un agent de lessivage aqueux, **caractérisé en ce que** l'agent de lessivage contient i) un ou plusieurs acides alcanesulfoniques présentant un radical propyle, éthyle ou méthyle et de l'acide sulfurique à un rapport pondéral d'acide alcanesulfonique à acide sulfurique entre 1:1000 et 1:1 et/ou ii) un mélange d'un ou de plusieurs sels d'acide alcanesulfonique présentant un radical propyle, éthyle ou méthyle et de l'acide sulfurique dans un rapport pondéral de sel d'acide alcanesulfonique à acide sulfurique de 1:9 à 1:99.

2. Procédé selon la revendication 1, **caractérisé en ce que** la concentration en acide sulfurique se situe entre 0,1 et 50% en poids.

3. Procédé selon la revendication 1 ou 2, **caractérisé en ce que** l'agent de lessivage contient entre 0,001 et 50% en poids d'acide alcanesulfonique.

4. Procédé selon l'une quelconque des revendications 1 à 3, **caractérisé en ce que** l'acide alcanesulfonique est l'acide méthanesulfonique.

5. Procédé selon l'une quelconque des revendications 1 à 4, **caractérisé en ce que** le sel d'acide alcanesulfonique est un sel d'ammonium, de métal alcalin ou de métal alcalino-terreux.

6. Procédé selon l'une quelconque des revendications 1 à 5, **caractérisé en ce que** le sel d'acide alcanesulfonique est un sel d'acide méthanesulfonique, en particulier le méthanesulfonate de sodium.

7. Procédé selon l'une quelconque des revendications 1 à 6, **caractérisé en ce que** l'agent de lessivage contient un ou plusieurs agents tensioactifs non ioniques, anioniques, cationiques ou amphotères.

8. Procédé selon la revendication 7, **caractérisé en ce que** le ou les agents tensioactifs en une concentration totale de 0,1 à 0,3% en poids dans une solution aqueuse à 2% de H₂SO₄ à 23°C condui(sen)t à une diminution de l'angle de contact sur le verre après 1 seconde d'au moins 10°.

9. Procédé selon l'une quelconque des revendications 1 à 8, **caractérisé en ce que** le composé métallique contient du cuivre, du titane, du CaF₂, du zinc, du plomb, du molybdène, de l'antimoine, du bismuth, du mercure, du cobalt, du nickel, de l'aluminium, du lanthane, un lanthanide ou de l'uranium.

10. Procédé selon la revendication 9, **caractérisé en ce que** le composé métallique contient du cuivre, du titane ou du CaF₂.

11. Procédé selon l'une quelconque des revendications 1 à 10, **caractérisé en ce que** le procédé sert à l'extraction de cuivre.

12. Agent de lessivage aqueux, contenant
a) 0,001-50% en poids d'un ou de plusieurs acides alcanesulfoniques présentant un radical propyle, éthyle ou méthyle,
b) 0,1-50% en poids d'acide sulfurique et
c) 0-5% en poids d'un ou de plusieurs agents tensioactifs non ioniques, anioniques, cationiques ou amphotères
le rapport pondéral d'acide alcanesulfonique à acide sulfurique se situant entre 1:1000 et 1:1.

13. Agent de lessivage aqueux, contenant
a) 1-10% en poids d'un ou de plusieurs sels d'acide alcanesulfonique présentant un radical propyle, éthyle ou méthyle,
b) 90-99% en poids d'acide sulfurique et
c) 0-5% en poids d'un ou de plusieurs agents tensioactifs non ioniques, anioniques, cationiques ou amphotères
le rapport pondéral de sel d'acide alcanesulfonique à acide sulfurique se situant entre 1:9 et 1:99.
